# EUROPEAN PATENT SPECIFICATION

(11) **EP 4 501 875 B1**
(45) Date of publication and mention of the grant of the patent: **09.09.2026**
(21) Application number: 23841833.9
(22) Date of filing: 18.04.2023
(51) Int. Cl.: C03C 10/12, C03C 21/00, C03B 32/02

(54) **ELECTRONIC DEVICE, GLASS COVER PLATE, AND CHEMICALLY STRENGTHENED GLASS-CERAMIC**
ELEKTRONISCHE VORRICHTUNG, GLASABDECKPLATTE UND CHEMISCH VERSTÄRKTE GLASKERAMIK
DISPOSITIF ÉLECTRONIQUE, PLAQUE DE RECOUVREMENT EN VERRE ET VITROCÉRAMIQUE CHIMIQUEMENT RENFORCÉE

(30) Priority: 22.07.2022 CN 202210872140
(43) Date of publication of application: 05.02.2025
(73) Proprietor: Honor Device Co., Ltd., Shenzhen, Guangdong 518040 (CN)
(72) Inventor: XU, Wenbin, Shenzhen, Guangdong 518040 (CN); CHEN, Qiuqun, Shenzhen, Guangdong 518040 (CN); YIN, Xuewen, Shenzhen, Guangdong 518040 (CN); SHI, Zhenguo, Shenzhen, Guangdong 518040 (CN)
(74) Representative: Gill Jennings & Every LLP
(86) International application number: PCT/CN2023/089019
(87) International publication number: WO 2024/016760

(56) References cited:
- CN-A- 113 526 872
- CN-A- 113 754 289
- CN-A- 114 671 618
- JP-A- 2016 124 723

## Description

### TECHNICAL FIELD

This application relates to the field of electronic device technologies, and in particular, to an electronic device, a glass cover, and chemically-toughened microcrystalline glass.

### BACKGROUND

With popularization of electronic devices such as a smartphone and a tablet computer, design requirements for a large-size display screen and an ultra-thin electronic device are increasingly prominent. This imposes a higher requirement on mechanical performance of a glass cover used to protect the display screen. How to improve mechanical performance of the glass cover so as to improve drop resistance performance of the electronic device is a technical problem to be urgently resolved currently. CN 114671618 A discloses a glass ceramic and a method of manufacturing such a glass ceramic, wherein crystal phase includes lithium disilicate and feldspar.

### SUMMARY

Embodiments of this application provide an electronic device, a glass cover, and chemically-toughened microcrystalline glass, to improve drop resistance performance of the electronic device.

To achieve the foregoing objective, the following technical solutions are used in the embodiments of this application.

According to a first aspect, this application provides an electronic device, including a glass cover, where the glass cover includes chemically-toughened microcrystalline glass, the chemically-toughened microcrystalline glass includes a first surface and a second surface that are opposite to each other, wherein each of the first and second surfaces have been chemically toughened, the chemically-toughened microcrystalline glass has a stress curve, the stress curve is a curve drawn by using a distance between any point inside the chemically-toughened microcrystalline glass and the first surface or the second surface as a horizontal coordinate and a stress intensity at the point as a vertical coordinate, an area enclosed by straight lines x=50 µm and y=0 and the stress curve is greater than or equal to 36000t2-21600t+3150 MPa*µm, and t is a thickness of the chemically-toughened microcrystalline glass, and is in a unit of mm.

That is, an integral area S of the stress curve L in an interval of x∈[50 µm, DOC] is greater than or equal to 36000t2-21600t+3150 MPa*µm, that is, S≥36000t2-21600t+3150 MPa*µm. DOC is a depth of a compressive stress layer of the chemically-toughened microcrystalline glass, and the depth of the compressive stress layer is a depth at which a stress intensity is 0.

A larger area S enclosed by the stress curve L, the straight line y=0, and the straight line x=50 µm indicates a larger stress intensity value in the interval between the depth of 50 µm and the depth of the compressive stress layer, a better rough-ground drop resistance effect of the chemically-toughened microcrystalline glass, and rougher ground that the chemically-toughened microcrystalline glass can withstand during a drop. Therefore, in the electronic device in this embodiment of this application, the area S enclosed by the stress curve L of the chemically-toughened microcrystalline glass, the straight line y=0, and the straight line x=50 µm is greater than or equal to 36000t2-21600t+3150 MPa*µm, that is, the integral area S of the stress curve L of the chemically-toughened microcrystalline glass in the interval of xE[50 µm, DOC] is greater than or equal to 36000t2-21600t+3150 MPa*µm. In this way, rough-ground drop resistance performance of the chemically-toughened microcrystalline glass can be improved, so that drop resistance performance of the glass cover and the electronic device including the glass cover can be improved.

The microcrystalline glass used to form the chemically-toughened microcrystalline glass includes a primary crystalline phase and a secondary crystalline phase, the primary crystalline phase is a crystalline phase with a highest content in the microcrystalline glass, a crystalline phase other than the primary crystalline phase in the microcrystalline glass is the secondary crystalline phase, and a ratio of a mass fraction of the primary crystalline phase to a mass fraction of the secondary crystalline phase is greater than or equal to 5. For example, the ratio of the mass fraction of the primary crystalline phase to the mass fraction of the secondary crystalline phase is equal to 5, 6, 7, 8, 9, 10, 11, 12, 13, or 14.

In this way, the ratio of the mass fraction of the primary crystalline phase to the mass fraction of the secondary crystalline phase is controlled to be greater than or equal to 5, so that purity of the primary crystalline phase can be improved, and a quantity of times of scattering between different crystalline phases can be reduced. Therefore, transmittance of the microcrystalline glass can be improved, haze of the microcrystalline glass can be reduced, and optical performance of the microcrystalline glass can be improved, to help improve optical performance of the chemically-toughened microcrystalline glass.

The primary crystalline phase consists of lithium disilicate. In an aspect, inside the microcrystalline glass, a lithium disilicate crystalline phase is an irregular and unoriented microstructure, and has good mechanical performance. Therefore, hardness and a Young's modulus of the microcrystalline glass can be improved, and further extension of a microcrack on a surface of the microcrystalline glass or inside the microcrystalline glass can be prevented, or the microcrack can be bent and is not prone to propagate, so that strength and mechanical properties of the microcrystalline glass can be greatly improved. In this way, the lithium disilicate crystalline phase can provide high mechanical strength and fracture toughness for the microcrystalline glass, and can reduce sensitivity of the microcrystalline glass to lithium ions, improve an acid-alkali cleaning resistance capability of the microcrystalline glass, and reduce manufacturing difficulty of the microcrystalline glass in a subsequent chemical toughening process, so that the microcrystalline glass can perform ion exchange to obtain additional mechanical strength, and mechanical strength of the chemically-toughened microcrystalline glass can be improved. In another aspect, a refractive index of the lithium disilicate crystalline phase is close to a refractive index of glass, so that a quantity of refraction times of the microcrystalline glass can be reduced, transmittance of the microcrystalline glass can be improved, and haze of the microcrystalline glass can be reduced. Therefore, optical performance of the microcrystalline glass can be further improved, and optical performance of the chemically-toughened microcrystalline glass can be improved.

In a possible implementation of the first aspect, a depth of a compressive stress layer of the chemically-toughened microcrystalline glass is greater than or equal to 0.18t and less than or equal to 0.25t. That is, 0.18t≤depth of the compressive stress layer≤0.25t. In this way, it can be ensured that the chemically-toughened microcrystalline glass has a large depth of the compressive stress layer, so that the compressive stress layer is formed in a deeper part of the chemically-toughened microcrystalline glass. This helps improve resistance strength of the chemically-toughened microcrystalline glass to piercing by a hard object, and prevents the electronic device from being cracked when the electronic device is dropped on rough ground and collides with a protrusion on the rough ground.

In a possible implementation of the first aspect, center tensile stress of the chemically-toughened microcrystalline glass is greater than or equal to 70 Mpa, and an average size of longest edges of fragments obtained after the chemically-toughened microcrystalline glass is broken under extrusion of a circular-head metal pressure rod with a diameter of 10 mm is greater than or equal to 5 mm. For the chemically-toughened microcrystalline glass in this embodiment of this application, when the center tensile stress CT is greater than or equal to 70 Mpa, it can be ensured that internal tension of the chemically-toughened microcrystalline glass is appropriate, so that a risk of spontaneous breakage is avoided, safety performance is high, and a rough-ground drop resistance capability is strong.

In a possible implementation of the first aspect, center tensile stress of the chemically-toughened microcrystalline glass is greater than or equal to 90 MPa, and an average size of longest edges of fragments obtained after the chemically-toughened microcrystalline glass is broken under extrusion of a circular-head metal pressure rod with a diameter of 10 mm is greater than or equal to 5 mm. For the chemically-toughened microcrystalline glass in this embodiment of this application, when the center tensile stress CT is greater than or equal to 90 Mpa, it can be ensured that internal tension of the chemically-toughened microcrystalline glass is appropriate, so that a risk of spontaneous breakage is avoided, safety performance is high, and a rough-ground drop resistance capability is strong.

In a possible implementation of the first aspect, center tensile stress of the chemically-toughened microcrystalline glass is greater than or equal to 100 megapascals, and an average size of longest edges of fragments obtained after the chemically-toughened microcrystalline glass is broken under extrusion of a circular-head metal pressure rod with a diameter of 10 mm is greater than or equal to 5 mm. For the chemically-toughened microcrystalline glass in this embodiment of this application, when the center tensile stress CT is greater than or equal to 100 Mpa, it can be ensured that internal tension of the chemically-toughened microcrystalline glass is appropriate, so that a risk of spontaneous breakage is avoided, safety performance is high, and a rough-ground drop resistance capability is strong.

In a possible implementation of the first aspect, the mass fraction of the secondary crystalline phase is less than or equal to 10%. For example, the mass fraction of the secondary crystalline phase may be 10%, 9.5%, 9%, 8.5%, 8%, 7.5%, 7%, 6.5%, 6%, 5.5%, 5%, 4.5%, 4%, 3.5%, 3%, 2.5%, 2%, 1.5%, 1%, or the like. In this way, the purity of the primary crystalline phase can be further ensured, to improve optical performance of the microcrystalline glass and the chemically-toughened microcrystalline glass.

In a possible implementation of the first aspect, the secondary crystalline phase includes at least one of lithium feldspar, lithium metasilicate, zirconium salt, and phosphate crystal.

In a possible implementation of the first aspect, the primary crystalline phase is lithium disilicate, and the secondary crystalline phase includes at least one of lithium feldspar, lithium metasilicate, zirconium salt, and phosphate crystal.

In a possible implementation of the first aspect, an average crystalline phase particle size of the microcrystalline glass is less than or equal to 80 nm. For example, the average crystalline phase particle size of the microcrystalline glass is less than or equal to 60 nm, or the average crystalline phase particle size of the microcrystalline glass is less than or equal to 40 nm, or the average crystalline phase particle size of the microcrystalline glass is less than or equal to 30 nm. The foregoing microcrystalline glass has a small average crystalline phase particle size, so that it can be ensured that average transmittance of the microcrystalline glass is high and haze thereof is small. Therefore, the microcrystalline glass has excellent optical performance, and optical performance of the chemically-toughened microcrystalline glass can be ensured.

In a possible implementation of the first aspect, the average crystalline phase particle size of the microcrystalline glass is greater than or equal to 10 nm. If the average crystalline phase particle size is excessively small, drop resistance performance of the microcrystalline glass is affected. Therefore, both optical performance and drop resistance performance of the microcrystalline glass can be considered by controlling the average crystalline phase particle size of the microcrystalline glass to be not less than 10 nm.

In a possible implementation of the first aspect, transmittance of the microcrystalline glass at a wavelength of 550 nm is not less than 90%.

In a possible implementation of the first aspect, a Young's modulus of the microcrystalline glass is greater than or equal to 95 GPa. In this way, rigidity and impact resistance performance of the microcrystalline glass can be improved, to help reduce deformation of the glass cover, so that a screen can be better protected. In addition, the microcrystalline glass in this embodiment of this application is based on a high Young's modulus, so that the microcrystalline glass has a high compressive stress-bearing capacity and a robust glass safety characteristic, and can be used to bear higher chemical toughening stress, thereby reducing manufacturing difficulty of the chemically-toughened microcrystalline glass while further improving drop resistance performance of the chemically-toughened microcrystalline glass.

In a possible implementation of the first aspect, the microcrystalline glass may be processed by using the following high-temperature ion exchange process, to obtain the chemically-toughened microcrystalline glass:

S10: Perform the first toughening processing on the microcrystalline glass in first molten salt, where the first molten salt includes NaNO3, a mass fraction of NaNO3 is greater than or equal to 30%, time of the first toughening processing is 1.5h~10h, and a temperature of the first toughening processing is 380°C~450°C.

S20: Perform, in second molten salt, the second toughening processing on the microcrystalline glass that undergoes the first toughening processing, where the second molten salt includes KNO3, a mass fraction of KNO3 is greater than or equal to 80%, time of the second toughening processing is 0.2h~6h, and a temperature of the second toughening processing is 380°C~450°C.

In this way, after processing is performed by using the foregoing high-temperature ion exchange process, the chemically-toughened microcrystalline glass may be obtained. In addition, in this embodiment of this application, because the microcrystalline glass used to form the chemically-toughened microcrystalline glass is less sensitive to a concentration of lithium ions, a mass fraction of LiNO3 in the first molten salt and the second molten salt does not need to be strictly controlled, so that compatibility of the first molten salt and the second molten salt with LiNO3 is high. Specifically, the mass fraction of LiNO3 in the first molten salt and the second molten salt may be greater than or equal to 0 and less than or equal to 3%. In this way, when the chemically-toughened microcrystalline glass that meets a requirement of the foregoing stress curve is obtained, manufacturing difficulty of the chemically-toughened microcrystalline glass can be reduced, a service life of the first molten salt and the second molten salt can be prolonged, and manufacturing costs can be reduced.

In a possible implementation of the first aspect, the microcrystalline glass is manufactured from a glass matrix, chemical composition of the glass matrix includes: SiO2, Al2O3, Li2O, Na2O, K2O, P2O5, and ZrO2, a sum of a mass fraction of SiO2 and a mass fraction of Al2O3 is greater than or equal to 65% and less than or equal to 80%, a mass fraction of Li2O is greater than or equal to 8% and less than or equal to 15%, a sum of a mass fraction of Na2O and a mass fraction of K2O is greater than 0 and less than or equal to 10%, and a sum of a mass fraction of P2O5 and a mass fraction of ZrO2 is greater than or equal to 5% and less than or equal to 15%. Based on the foregoing formulation, microcrystalline glass that has the foregoing type of the primary crystalline phase, the foregoing purity of the primary crystalline phase, and the average crystalline phase particle size is conveniently produced, so that the microcrystalline glass has excellent mechanical performance and optical performance. Therefore, when the chemically-toughened microcrystalline glass that meets a requirement of the foregoing stress curve is obtained, manufacturing difficulty and manufacturing costs of the chemically-toughened microcrystalline glass can be reduced.

In a possible implementation of the first aspect, the microcrystalline glass is produced from the glass matrix by performing a first step of heat processing and a second step of heat processing, a temperature of the first step of heat processing is 500°C~550°C, processing time thereof is 1h~8h, a temperature of the second step of heat processing is 600°C~900°C, and processing time thereof is 1h~8h. Based on the foregoing formulation and heat processing process, microcrystalline glass that has the foregoing type of the primary crystalline phase, the foregoing purity of the primary crystalline phase, and the average crystalline phase particle size may be produced, so that the microcrystalline glass has excellent mechanical performance and optical performance. Therefore, when the chemically-toughened microcrystalline glass that meets a requirement of the foregoing stress curve is obtained, manufacturing difficulty and manufacturing costs of the chemically-toughened microcrystalline glass can be reduced.

In a possible implementation of the first aspect, before and after heat bending is performed on the microcrystalline glass, a change amount of an average grain size of the microcrystalline glass is less than or equal to 5%, and/or haze thereof is less than or equal to 0.2%, and/or a value of a chromaticity coordinate |b| obtained after heat bending is performed on the microcrystalline glass is less than or equal to 0.6.

In a possible implementation of the first aspect, the electronic device further includes a middle frame and a display screen, the display screen is disposed on one side of the middle frame, the glass cover is stacked with the display screen, and the glass cover is disposed on a side that is of the display screen and that faces away from the middle frame. In this embodiment, the glass cover is used as a transparent cover of the electronic device.

In a possible implementation of the first aspect, the electronic device further includes a middle frame and a display screen, and the display screen and the glass cover are respectively disposed on two opposite sides of the middle frame. In this embodiment, the glass cover is used as a back cover of the electronic device.

In a possible implementation of the first aspect, the glass cover is a 3D glass cover.

According to a second aspect, an embodiment of this application provides a glass cover, including chemically-toughened microcrystalline glass, where the chemically-toughened microcrystalline glass includes a first surface and a second surface that are opposite to each other, wherein each of the first and second surfaces have been chemically toughened, the chemically-toughened microcrystalline glass has a stress curve, the stress curve is a curve drawn by using a distance between any point inside the chemically-toughened microcrystalline glass and the first surface or the second surface as a horizontal coordinate and a stress intensity at the point as a vertical coordinate, an area enclosed by straight lines x=50 µm and y=0 and the stress curve is greater than or equal to 36000t2-21600t+3150 MPa*µm, and t is a thickness of the chemically-toughened microcrystalline glass, and is in a unit of mm.

In the second aspect, microcrystalline glass used to form the chemically-toughened microcrystalline glass includes a primary crystalline phase and a secondary crystalline phase, the primary crystalline phase is a crystalline phase with a highest content in the microcrystalline glass, a crystalline phase other than the primary crystalline phase in the microcrystalline glass is the secondary crystalline phase, and a ratio of a mass fraction of the primary crystalline phase to a mass fraction of the secondary crystalline phase is greater than or equal to 5. In the second aspect, the primary crystalline phase consists of lithium disilicate.

In a possible implementation of the second aspect, a depth of a compressive stress layer of the chemically-toughened microcrystalline glass is greater than or equal to 0.18t and less than or equal to 0.25t. That is, 0.18t≤depth of the compressive stress layer≤0.25t.

In a possible implementation of the second aspect, center tensile stress of the chemically-toughened microcrystalline glass is greater than or equal to 70 megapascals, and an average size of longest edges of fragments obtained after the chemically-toughened microcrystalline glass is broken under extrusion of a circular-head metal pressure rod with a diameter of 10 mm is greater than or equal to 5 mm.

In a possible implementation of the second aspect, the mass fraction of the secondary crystalline phase is less than or equal to 10%.

In a possible implementation of the second aspect, the secondary crystalline phase includes at least one of lithium feldspar, lithium metasilicate, zirconium salt, and phosphate crystal.

In a possible implementation of the second aspect, transmittance of the microcrystalline glass at a wavelength of 550 nm is not less than 90%.

In a possible implementation of the second aspect, a Young's modulus of the microcrystalline glass is greater than or equal to 95 GPa.

In a possible implementation of the second aspect, the microcrystalline glass may be processed by using the following high-temperature ion exchange process, to obtain the chemically-toughened microcrystalline glass:

S10: Perform the first toughening processing on the microcrystalline glass in first molten salt, where the first molten salt includes NaNO3, a mass fraction of NaNO3 is greater than or equal to 30%, time of the first toughening processing is 1.5h~10h, and a temperature of the first toughening processing is 380°C~450°C.

S20: Perform, in second molten salt, the second toughening processing on the microcrystalline glass that undergoes the first toughening processing, where the second molten salt includes KNO3, a mass fraction of KNO3 is greater than or equal to 80%, time of the second toughening processing is 0.2h~6h, and a temperature of the second toughening processing is 380°C~450°C.

In a possible implementation of the second aspect, the microcrystalline glass is manufactured from a glass matrix, the glass matrix includes: SiO2, Al2O3, Li2O, Na2O, K2O, P2O5, and ZrO2, a sum of a mass fraction of SiO2 and a mass fraction of Al2O3 is greater than or equal to 65% and less than or equal to 80%, a mass fraction of Li2O is greater than or equal to 8% and less than or equal to 15%, a sum of a mass fraction of Na2O and a mass fraction of K2O is greater than 0 and less than or equal to 10%, and a sum of a mass fraction of P2O5 and a mass fraction of ZrO2 is greater than or equal to 5% and less than or equal to 15%.

In a possible implementation of the second aspect, the microcrystalline glass is produced from the glass matrix by performing a first step of heat processing and a second step of heat processing, a temperature of the first step of heat processing is 500°C~550°C, processing time thereof is 1h~8h, a temperature of the second step of heat processing is 600°C~900°C, and processing time thereof is 1h~8h.

In a possible implementation of the second aspect, the glass cover is a 3D glass cover.

In a possible implementation of the second aspect, the glass cover is used as a transparent cover or a back cover of an electronic device.

According to a third aspect, this application proposes chemically-toughened microcrystalline glass, where the chemically-toughened microcrystalline glass includes a first surface and a second surface that are opposite to each other, wherein each of the first and second surfaces have been chemically toughened, the chemically-toughened microcrystalline glass has a stress curve, the stress curve is a curve drawn by using a distance between any point inside the chemically-toughened microcrystalline glass and the first surface or the second surface as a horizontal coordinate and a stress intensity at the point as a vertical coordinate, an area enclosed by straight lines x=50 µm and y=0 and the stress curve is greater than or equal to 36000t2-21600t+3150 MPa*µm, and t is a thickness of the chemically-toughened microcrystalline glass, and is in a unit of mm. In the third aspect, microcrystalline glass used to form the chemically-toughened microcrystalline glass includes a primary crystalline phase and a secondary crystalline phase, the primary crystalline phase is a crystalline phase with a highest content in the microcrystalline glass, a crystalline phase other than the primary crystalline phase in the microcrystalline glass is the secondary crystalline phase, and a ratio of a mass fraction of the primary crystalline phase to a mass fraction of the secondary crystalline phase is greater than or equal to 5. In the third aspect, the primary crystalline phase consists of lithium disilicate.

In a possible implementation of the third aspect, center tensile stress of the chemically-toughened microcrystalline glass is greater than or equal to 70 MPa, and an average size of longest edges of fragments obtained after the chemically-toughened microcrystalline glass is broken under extrusion of a circular-head metal pressure rod with a diameter of 10 mm is greater than or equal to 5 mm.

For technical effects brought by any one of design manners in the second aspect and the third aspect, refer to the technical effects brought by different design manners in the first aspect. Details are not described herein again.

### BRIEF DESCRIPTION OF DRAWINGS

FIG. 1 is a schematic diagram of a structure of an electronic device according to some embodiments of this application;
FIG. 2 is a cross-sectional view of the electronic device shown in FIG. 1 that is taken along a line A-A;
FIG. 3 is a cross-sectional view of chemically-toughened microcrystalline glass according to some embodiments of this application; and
FIG. 4 shows an internal stress curve of chemically-toughened microcrystalline glass according to some embodiments of this application.

### Reference numerals:

100. electronic device;
10. screen; 11. transparent cover; 12. display screen; 13. chemically-toughened microcrystalline glass; 131. first surface; 132. second surface; 20. middle frame; 21. frame; 22. middle plate; 30. back cover;
40. circuit board; 41. primary circuit board; 42. secondary circuit board; 50. battery.

### DESCRIPTION OF EMBODIMENTS

In the embodiments of this application, words such as "example" or "for example" are used to represent giving an example, an illustration, or a description. Any embodiment or design solution described as "example" or "for example" in the embodiments of this application should not be construed as being more preferred or advantageous than other embodiments or design solutions. Exactly, the words such as "example" or "for example" are intended to present related concepts in a specific manner.

In the embodiments of this application, the terms "first" and "second" are merely used for the purpose of description, and should not be understood as an indication or implication of relative importance or an implicit indication of a quantity of indicated technical features. Therefore, a feature defined by "first" or "second" may explicitly or implicitly include one or more features.

In the description of the embodiments of this application, the term "at least one" means one or more, and "a plurality of" means two or more. "At least one of the following items" or a similar expression thereof means any combination of these items, including a single item or any combination of a plurality of items. For example, at least one of a, b, or c may represent a, b, c, a-b, a-c, b-c, or a-b-c, where a, b, and c may be singular or plural.

In the description of the embodiments of this application, the term "and/or" refers to and covers any of and all possible combinations of one or more associated listed items. The term "and/or" describes an association relationship between associated objects, and indicates that three relationships may exist. For example, "A and/or B" may indicate the following three cases: Only A exists, both A and B exist, and only B exists. In addition, the character "/" in this application usually represents an "or" relationship between associated objects.

In the description of the embodiments of this application, it should be noted that unless otherwise specified and defined explicitly, the terms "mount", "connect", and "connection" should be understood in a broad sense. For example, "connection" may be a detachable connection or a non-detachable connection; or may be a direct connection or an indirect connection through an intermediate medium. A "fixed connection" means that there is a mutual connection and a relative position relationship remains unchanged after the connection.

In the description of the embodiments of this application, unless otherwise specified and defined explicitly, the terms "mount", "connect", and "connection" should be understood in a broad sense. For example, "connection" may be a detachable connection or a non-detachable connection; or may be a direct connection or an indirect connection through an intermediate medium.

In the descriptions of embodiments of this application, the term "include", "comprise", or any other variant thereof is intended to cover non-exclusive inclusion, so that a process, method, article, or apparatus that includes a series of elements includes not only those elements but also other elements that are not explicitly listed, or includes elements inherent to such a process, method, article, or apparatus. Without further limitation, an element defined by the sentence "including a..." does not exclude existence of other identical elements in the process, method, article, or apparatus including the element. Without further limitation, an element defined by the sentence "including a..." does not exclude existence of other identical elements in the process, method, article, or apparatus including the element.

Embodiments of this application provide an electronic device, where the electronic device includes a glass cover, and the glass cover may be used as a transparent cover, a back cover, and the like of the electronic device. The glass cover includes chemically-toughened microcrystalline glass. That is, at least a part of the glass cover is manufactured from the chemically-toughened microcrystalline glass.

To improve drop resistance performance of the electronic device, in the electronic device provided in the embodiments of this application, an area enclosed by a stress curve L of the chemically-toughened microcrystalline glass and straight lines x=50 µm and y=0 is greater than or equal to 36000t²-21600t+3150 MPa*µm. That is, an integral area of the stress curve L of the chemically-toughened microcrystalline glass in an interval of x∈[50 µm, DOC] is greater than or equal to 36000t²-21600t+3150 MPa*µm, where DOC is a depth of a compressive stress layer of the chemically-toughened microcrystalline glass, t is a thickness of the chemically-toughened microcrystalline glass, and a unit of t is mm. A larger integral area of the stress curve L of the chemically-toughened microcrystalline glass in the interval of x∈[50 µm, DOC] indicates a better rough-ground drop resistance effect of the chemically-toughened microcrystalline glass, and rougher ground that the chemically-toughened microcrystalline glass can withstand. Therefore, in the embodiments of this application, the glass cover of the electronic device and the electronic device including the glass cover each have a high compressive stress-bearing capacity, so that a rough-ground drop resistance capability of the electronic device is significantly improved.

The electronic device provided in the embodiments of this application includes but is not limited to an electronic device such as a mobile phone, a tablet personal computer (tablet personal computer), a laptop computer (laptop computer), a personal digital assistant (personal digital assistant, PDA), a personal computer, a notebook computer, a vehicle-mounted device, and a wearable device. A specific form of the electronic device is not specially limited in the embodiments of this application.

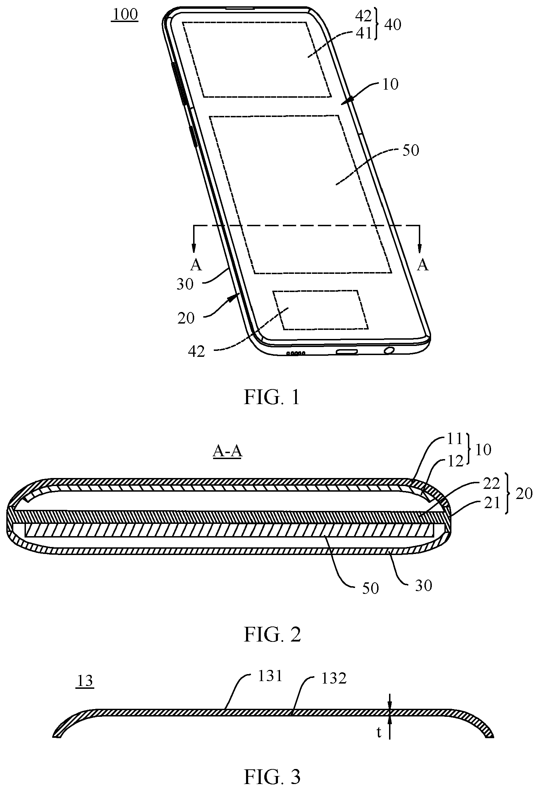

Referring to FIG. 1 and FIG. 2, FIG. 1 is a schematic diagram of a structure of an electronic device 100 according to some embodiments of this application, and FIG. 2 is a cross-sectional view of the electronic device 100 shown in FIG. 1 that is taken along a line A-A. In this embodiment, the electronic device 100 is a phablet. Specifically, the electronic device 100 includes a screen 10, a middle frame 20, a back cover 30, a circuit board 40, and a battery 50. Because the circuit board 40 and the battery 50 are located inside the electronic device 100 and are not visible, the circuit board 40 and the battery 50 in FIG. 1 are represented by using a dashed line.

It may be understood that FIG. 1, FIG. 2, and the following related accompanying drawings schematically show only some components included in the electronic device 100. Actual shapes, actual sizes, actual positions, and actual structures of these components are not limited to FIG. 1, FIG. 2, and the following accompanying drawings. In some other embodiments, alternatively, the electronic device 100 may not include the screen 10.

The screen 10 is configured to display an image, a video, or the like. The screen 10 may include a transparent cover 11 and a display screen 12. The transparent cover 11 and the display screen 12 are stacked and fixedly connected. The transparent cover 11 is mainly configured to protect the display screen 12 and prevent dust. The transparent cover 11 may be a 2D cover, a 2.5D cover, or a 3D cover. The 2D cover is a common pure flat plane, and does not have any arc design. All points on the cover are on a same plane. This type of cover is referred to as the 2D cover. The 2.5D cover is flat in the middle, but an edge thereof has a specific arc design. Compared with the 2D cover, arc processing is performed on the edge of the 2.5D cover based on the flat cover. The 3D cover uses an arc design at both middle and edge parts of the flat cover. A curved design in the 3D cover may increase a visible area, more conforms to a curvature of the retina of the human eye, and provides better visual experience.

The display screen 12 may be a flexible display screen, or may be a rigid display screen.

The middle frame 20 serves as a "support skeleton" of the electronic device 100. Referring to FIG. 2, the middle frame 20 includes a frame 21 and a middle plate 22, and the middle plate 22 is fastened to an inner surface of the frame 21 for one circle. For example, the middle plate 22 may be fastened to the frame 21 through welding, or the middle plate 22 and the frame 21 may be an integrally formed structure. The screen 10 is fixedly connected to one side of the frame 21 by using the transparent cover 11. For example, the transparent cover 11 may be fixedly connected to the frame 21 by using adhesive.

The back cover 30 is fixedly connected to a side that is of the middle frame 20 and that is away from the screen 10. The frame 21 is located between the back cover 30 and the transparent cover 11. The transparent cover 11, the back cover 30, and the frame 21 enclose internal accommodation space of the electronic device 100, and the internal accommodation space accommodates the display screen 12, the circuit board 40, and the like. For example, the back cover 30 may be fixedly connected to the frame 21 by using adhesive. The circuit board 40, the battery 50, and the like may be fixedly connected to the middle plate 22 through a threaded connection, clamping, welding, or the like. The back cover 30 may be a 2D cover, a 2.5D cover, or a 3D cover.

In some embodiments, to improve aesthetic appearance of the electronic device 100, one of the transparent cover 11 and the back cover 30 is disposed as a glass cover, or both the transparent cover 11 and the back cover 30 are disposed as a glass cover. In addition, as a user has a higher requirement on the electronic device 100, to provide better user experience for the user, increasingly more mobile phones, especially a high-end mobile phone, use a 3D glass cover (namely, curved cover) design. However, because the 3D glass cover is more fragile and more expensive than the 2D cover, it is urgent to design a glass cover that is more resistant to a drop.

On this basis, to improve drop resistance performance of the electronic device 100, the glass cover in some embodiments includes chemically-toughened microcrystalline glass. Specifically, the glass cover may be chemically-toughened microcrystalline glass as a whole, or the glass cover may be partially chemically-toughened microcrystalline glass.

Microcrystalline glass is obtained as follows: Crystallization heat processing is performed, in a specific temperature system, on base glass with specific composition in which a nucleating agent is added (or no nucleating agent is added), to uniformly precipitate a large quantity of tiny crystals in the glass, so that a dense multiphase complex with a microcrystalline phase and a glass phase is formed.

After the microcrystalline glass is processed by using a high-temperature ion exchange process (also referred to as a chemical toughening processing process), the chemically-toughened microcrystalline glass may be obtained. After ion exchange, alkali metal ions on a surface of the microcrystalline glass are replaced with alkali metal ions with a larger diameter, to obtain the chemically-toughened microcrystalline glass. For example, in the high-temperature ion exchange process, lithium ions in the microcrystalline glass may be replaced with sodium ions in molten salt (also referred to as a salt bath), and sodium ions in the microcrystalline glass may be replaced with potassium ions in the salt bath. In this way, before and after ion exchange, a volume difference is formed on a surface of the chemically-toughened microcrystalline glass, the volume difference on the surface of the chemically-toughened microcrystalline glass forms a compressive stress layer with a specific depth, and the compressive stress layer may eliminate or suppress generation and extension of a microcrack on the surface of the chemically-toughened microcrystalline glass, thereby improving mechanical performance of the chemically-toughened microcrystalline glass.

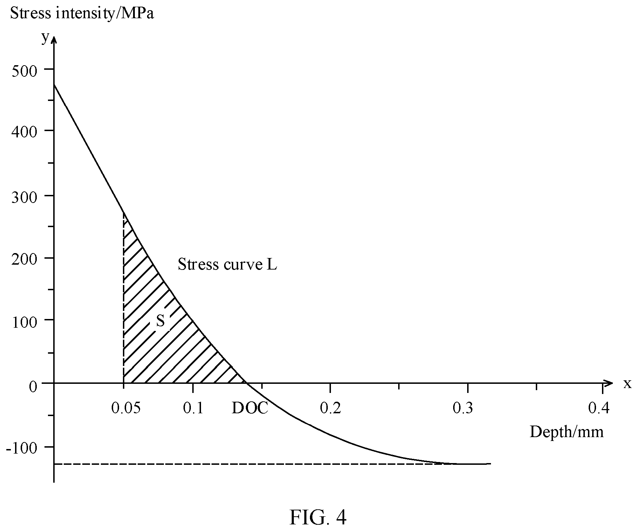

To further improve strength of the chemically-toughened microcrystalline glass, and obtain higher performance, so that the chemically-toughened microcrystalline glass can have good drop resistance performance on different rough ground (for example, marble ground and an asphalt road surface), refer to FIG. 3. FIG. 3 is a cross-sectional view of chemically-toughened microcrystalline glass 13 according to some embodiments of this application. In this embodiment, the chemically-toughened microcrystalline glass 13 is in a 3D form. The chemically-toughened microcrystalline glass 13 has a first surface 131 and a second surface 132 that are opposite to each other in a thickness direction of the chemically-toughened microcrystalline glass. Referring to FIG. 4, FIG. 4 shows an internal stress curve of chemically-toughened microcrystalline glass according to some embodiments of this application. The stress curve L is a curve drawn by using a distance between any point inside the chemically-toughened microcrystalline glass 13 and the first surface 131 or the second surface 132 as a horizontal coordinate and a stress intensity at the point as a vertical coordinate. The horizontal coordinate may also be denoted as a depth, and is in a unit of mm, and the vertical coordinate is in a unit of MPa. The stress curve may be measured by using a scattered light photoelastic stress meter SLP2000. Certainly, this application is not limited thereto, and the stress curve may alternatively be measured by another stress tester.

To ensure drop resistance performance of the chemically-toughened microcrystalline glass, referring to FIG. 4, an area S enclosed by the stress curve L of the chemically-toughened microcrystalline glass provided in some embodiments of this application, a straight line y=0, and a straight line x=50 µm is greater than or equal to 36000t²-21600t+3150 MPa*µm, where t is a total thickness of the chemically-toughened microcrystalline glass, and a unit of t is mm. It should be noted that, in this embodiment of this application, the thickness of the chemically-toughened microcrystalline glass is a distance between the first surface and the second surface.

That is, an integral area S of the stress curve L in an interval of x∈[50 µm, DOC] is greater than or equal to 36000t²-21600t+3150 MPa*µm, that is, S≥36000t²-21600t+3150 MPa*µm. DOC is a depth of a compressive stress layer of the chemically-toughened microcrystalline glass, and the depth of the compressive stress layer is a depth at which a stress intensity is 0.

A larger area S enclosed by the stress curve, the straight line y=0, and the straight line x=50 µm indicates a larger stress intensity value in the interval between the depth of 50 µm and the depth of the compressive stress layer, a better rough-ground drop resistance effect of the chemically-toughened microcrystalline glass, and rougher ground that the chemically-toughened microcrystalline glass can withstand during a drop. Therefore, in the electronic device in this embodiment of this application, the area S enclosed by the stress curve L of the chemically-toughened microcrystalline glass, the straight line y=0, and the straight line x=50 µm is greater than or equal to 36000t2-21600t+3150 MPa*µm, that is, the integral area S of the stress curve L of the chemically-toughened microcrystalline glass in the interval of x∈[50 µm, DOC] is greater than or equal to 36000t²-21600t+3150 MPa*µm. In this way, rough-ground drop resistance performance of the chemically-toughened microcrystalline glass can be improved, so that drop resistance performance of the glass cover and the electronic device including the glass cover can be improved.

In some embodiments of this application, a depth of a compressive stress layer of the chemically-toughened microcrystalline glass is greater than or 0.18t and less than or equal to 0.25t. That is, 0.18t≤depth of the compressive stress layer≤0.25t. In this way, it can be ensured that the chemically-toughened microcrystalline glass has a large depth of the compressive stress layer, so that the compressive stress layer is formed in a deeper part of the chemically-toughened microcrystalline glass. This helps improve resistance strength of the chemically-toughened microcrystalline glass to piercing by a hard object, and prevents the electronic device from being cracked when the electronic device is dropped on rough ground and collides with a protrusion on the rough ground.

Further, in this embodiment of this application, center tensile stress CT of the chemically-toughened microcrystalline glass is greater than or equal to 70 Mpa, and an average size of longest edges of fragments obtained after the chemically-toughened microcrystalline glass is broken under extrusion of a circular-head metal pressure rod with a diameter of 10 mm is greater than or equal to 5 mm. It should be noted that "an average size of longest edges of fragments" in this application is an average value of sizes of the longest edges of the fragments formed after the chemically-toughened microcrystalline glass is broken under extrusion of the circular-head metal pressure rod with the diameter of 10 mm. During calculation, the sizes of the longest edges of the fragments may be added, and then an obtained value is divided by a quantity of fragments. That is, the average size of the longest edges of the fragments is equal to a value obtained by dividing a sum of the sizes of the longest edges of the fragments by the quantity of fragments.

The center tensile stress CT is an absolute value of a stress intensity of the chemically-toughened microcrystalline glass at a depth of one half of t (namely, t/2). For example, in the example in FIG. 4, the thickness of the chemically-toughened microcrystalline glass is 0.62 mm, and an absolute value of a stress intensity of the chemically-toughened microcrystalline glass at a depth of 0.31 mm is the center tensile stress CT of the chemically-toughened microcrystalline glass.

Further, center tensile stress CT of the chemically-toughened microcrystalline glass is greater than or equal to 90 Mpa, and an average size of longest edges of fragments obtained after the chemically-toughened microcrystalline glass is broken under extrusion of a circular-head metal pressure rod with a diameter of 10 mm is greater than or equal to 5 mm.

Still further, center tensile stress CT of the chemically-toughened microcrystalline glass is greater than or equal to 100 Mpa, and an average size of longest edges of fragments obtained after the chemically-toughened microcrystalline glass is broken under extrusion of a circular-head metal pressure rod with a diameter of 10 mm is greater than or equal to 5 mm.

After the microcrystalline glass is chemically toughened, compressive stress and tensile stress are in a complementary state, so that overall stress of the glass is balanced. Increasing the compressive stress of the glass is accompanied by an increase in the corresponding center tensile stress. Intrinsic strength of the glass depends on a material and a thickness. When the center tensile stress CT of the glass is excessively high and reaches a limit of the intrinsic strength of the glass, there is a risk of spontaneous breakage. For the chemically-toughened microcrystalline glass in this embodiment of this application, when the center tensile stress CT is greater than or equal to 70 Mpa, 90 Mpa, or 100 Mpa, it can be ensured that internal tension of the chemically-toughened microcrystalline glass is appropriate, so that a risk of spontaneous breakage is avoided, safety performance is high, and a rough-ground drop resistance capability is strong.

In this embodiment of this application, the chemical microcrystalline glass is obtained after the microcrystalline glass is processed by using a high-temperature ion exchange process (also referred to as a chemical toughening processing process). The microcrystalline glass includes a primary crystalline phase and a secondary crystalline phase. The primary crystalline phase is a crystalline phase with a highest content in the microcrystalline glass, and the secondary crystalline phase is a crystalline phase other than the primary crystalline phase.

On the basis of any one of the foregoing embodiments, to ensure optical performance of the chemically-toughened microcrystalline glass and reduce manufacturing difficulty of the chemically-toughened microcrystalline glass on the basis of ensuring drop resistance performance of the chemically-toughened microcrystalline glass, in some embodiments, the primary crystalline phase is lithium disilicate (Li₂Si₂O₅). In an aspect, inside the microcrystalline glass, a lithium disilicate crystalline phase is an irregular and unoriented microstructure, and has good mechanical performance. Therefore, hardness and a Young's modulus of the microcrystalline glass can be improved, and further extension of a microcrack on a surface of the microcrystalline glass or inside the microcrystalline glass can be prevented, or the microcrack can be bent and is not prone to propagate, so that strength and mechanical properties of the microcrystalline glass can be greatly improved.

In this way, the lithium disilicate crystalline phase can provide high mechanical strength and fracture toughness for the microcrystalline glass, and can reduce sensitivity of the microcrystalline glass to lithium ions, improve an acid-alkali cleaning resistance capability of the microcrystalline glass, and reduce manufacturing difficulty of the microcrystalline glass in a subsequent chemical toughening process, so that the microcrystalline glass can perform ion exchange to obtain additional mechanical strength, and mechanical strength of the chemically-toughened microcrystalline glass can be improved. In another aspect, a refractive index of the lithium disilicate crystalline phase is close to a refractive index of glass, so that a quantity of refraction times of the microcrystalline glass can be reduced, transmittance of the microcrystalline glass can be improved, and haze of the microcrystalline glass can be reduced. Therefore, optical performance of the microcrystalline glass can be further improved, and optical performance of the chemically-toughened microcrystalline glass can be improved.

In some embodiments, the secondary crystalline phase includes one or more of lithium feldspar, lithium metasilicate, zirconium salt, and phosphate crystal.

On the basis of any one of the foregoing embodiments, a ratio of a mass fraction of the primary crystalline phase to a mass fraction of the secondary crystalline phase is greater than or equal to 5. That is, the mass fraction of the primary crystalline phase is five times or more than five times the mass fraction of the secondary crystalline phase. A formula for calculating the mass fraction of the primary crystalline phase is as follows: The mass fraction of the primary crystalline phase is equal to a value obtained by dividing a mass of the primary crystalline phase by a mass of the microcrystalline glass. A formula for calculating the mass fraction of the secondary crystalline phase is as follows: The mass fraction of the secondary crystalline phase is equal to a value obtained by dividing a mass of the secondary crystalline phase by the mass of the microcrystalline glass. For example, the ratio of the mass fraction of the primary crystalline phase to the mass fraction of the secondary crystalline phase is equal to 5, 6, 7, 8, 9, 10, 11, 12, 13, 14, or the like.

In this way, the ratio of the mass fraction of the primary crystalline phase to the mass fraction of the secondary crystalline phase is controlled to be greater than or equal to 5, so that purity of the primary crystalline phase can be improved, and a quantity of times of scattering between different crystalline phases can be reduced. Therefore, transmittance of the microcrystalline glass can be improved, haze of the microcrystalline glass can be reduced, and optical performance of the microcrystalline glass can be improved, to help improve optical performance of the chemically-toughened microcrystalline glass.

To further ensure purity of the primary crystalline phase and improve optical performance of the microcrystalline glass and the chemically-toughened microcrystalline glass, in some embodiments, the mass fraction of the secondary crystalline phase in the microcrystalline glass is less than or equal to 10%. For example, the mass fraction of the secondary crystalline phase may be 10%, 9.5%, 9%, 8.5%, 8%, 7.5%, 7%, 6.5%, 6%, 5.5%, 5%, 4.5%, 4%, 3.5%, 3%, 2.5%, 2%, 1.5%, 1%, or the like.

In some embodiments, an average crystalline phase particle size (namely, an average grain size) of the microcrystalline glass is less than or equal to 80 nm. For example, the average crystalline phase particle size of the microcrystalline glass is less than or equal to 60 nm, or the average crystalline phase particle size of the microcrystalline glass is less than or equal to 40 nm, or the average crystalline phase particle size of the microcrystalline glass is less than or equal to 30 nm. The foregoing microcrystalline glass has a small average crystalline phase particle size, so that it can be ensured that average transmittance of the microcrystalline glass is high and haze thereof is small. Therefore, the microcrystalline glass has excellent optical performance, and optical performance of the chemically-toughened microcrystalline glass can be ensured.

The average crystalline phase particle size is an average value of crystalline phase particle sizes. The average crystalline phase particle size may be determined through measurement by using an SEM scanning electron microscope (SEM) and an X-ray diffractometer (XRD).

On this basis, the average crystalline phase particle size of the microcrystalline glass is greater than or equal to 10 nm. For example, the average crystalline phase particle size of the microcrystalline glass is 10 nm~80 nm, or 10 nm~70 nm, or 10 nm~60 nm, or 10 nm~30 nm. If the average crystalline phase particle size is excessively small, drop resistance performance of the microcrystalline glass is affected. Therefore, both optical performance and drop resistance performance of the microcrystalline glass can be considered by controlling the average crystalline phase particle size of the microcrystalline glass to be not less than 10 nm.

In this embodiment of this application, a type of the primary crystalline phase, purity of the primary crystalline phase, and the average crystalline phase particle size in the microcrystalline glass are controlled, so that the microcrystalline glass can have excellent optical performance and drop resistance performance, and manufacturing difficulty of the chemically-toughened microcrystalline glass can be reduced.

Specifically, it is measured that, when a thickness is less than 1.3 mm, transmittance of the microcrystalline glass at a wavelength of 550 nm is not less than 90%.

In this embodiment, a Young's modulus of the microcrystalline glass is greater than or equal to 95 GPa. Preferably, the Young's modulus of the microcrystalline glass is greater than or equal to 100 GPa. More preferably, the Young's modulus of the microcrystalline glass is greater than or equal to 110 GPa. In this way, rigidity and impact resistance performance of the microcrystalline glass can be improved, to help reduce deformation of the glass cover, so that a screen can be better protected. In addition, the microcrystalline glass in this embodiment of this application is based on a high Young's modulus, so that the microcrystalline glass has a high compressive stress-bearing capacity and a robust glass safety characteristic, and can be used to bear higher chemical toughening stress, thereby reducing manufacturing difficulty of the chemically-toughened microcrystalline glass while further improving drop resistance performance of the chemically-toughened microcrystalline glass.

Specifically, the microcrystalline glass in this embodiment of this application may be processed by using the following high-temperature ion exchange process (namely, a chemical toughening processing process), to obtain the chemically-toughened microcrystalline glass:
S10: Perform the first toughening processing on the microcrystalline glass in first molten salt, where the first molten salt includes NaNO₃, and a mass fraction of NaNO₃ is greater than or equal to 30%. For example, the mass fraction of NaNO₃ is 30%, 33%, 35%, 40%, 45%, 50%, 55%, 60%, or the like.

In some embodiments, time of the first toughening processing is 1.5h~10h, and a temperature of the first toughening processing is 380°C~450°C. For example, the time of the first toughening processing is 1.5h, 2h, 2.5h, 3h, 3.5h, 4h, 4.5h, 5h, 5.5h, 6h, 6.5h, 7h, 7.5h, 8h, 8.5h, 9h, 9.5h, 10h, or the like. The temperature of the first toughening processing is 380°C, 390°C, 400°C, 410°C, 420°C, 430°C, 440°C, 450°C, or the like.

S20: Perform, in second molten salt, the second toughening processing on the microcrystalline glass that undergoes the first toughening processing, where the second molten salt includes KNO₃, and a mass fraction of KNO₃ is greater than or equal to 80%. For example, the mass fraction of KNO₃ is 80%, 85%, 88%, 90%, 92%, 93%, 95%, or the like.

In some embodiments, time of the second toughening processing is 0.2h~6h, and a temperature of the second toughening processing is 380°C~450°C. For example, the time of the second toughening processing is 0.2h, 0.3h, 0.5h, 0.8h, 1h, 1.5h, 2h, 2.5h, 3h, 3.5h, 4h, 4.5h, 5h, 5.5h, 6h, or the like. The temperature of the second toughening processing is 380°C, 390°C, 400°C, 410°C, 420°C, 430°C, 440°C, 450°C, or the like.

In this way, after processing is performed by using the foregoing high-temperature ion exchange process, the chemically-toughened microcrystalline glass may be obtained. In addition, in this embodiment of this application, because the microcrystalline glass used to form the chemically-toughened microcrystalline glass is less sensitive to a concentration of lithium ions, a mass fraction of LiNO₃ in the first molten salt and the second molten salt does not need to be strictly controlled, so that compatibility of the first molten salt and the second molten salt with LiNO₃ is high. Specifically, the mass fraction of LiNO₃ in the first molten salt and the second molten salt may be greater than or equal to 0 and less than or equal to 3%. In this way, when the chemically-toughened microcrystalline glass that meets a requirement of the foregoing stress curve is obtained, manufacturing difficulty of the chemically-toughened microcrystalline glass can be reduced, a service life of the first molten salt and the second molten salt can be prolonged, and manufacturing costs can be reduced.

It may be understood that, due to high intrinsic strength of the microcrystalline glass, in some other embodiments, only the first chemical toughening processing may be performed on the microcrystalline glass, and the second chemical toughening processing is not performed. In this way, a manufacturing process of the chemically-toughened microcrystalline glass can be simplified, and manufacturing difficulty the chemically-toughened microcrystalline glass can be further reduced, so that manufacturing costs of the chemically-toughened microcrystalline glass can be further reduced.

In addition, the microcrystalline glass that has the foregoing type of the primary crystalline phase and the foregoing purity of the primary crystalline phase further has excellent heat bending performance, has good manufacturing performance for a curved glass cover (namely, a 3D glass cover), and is suitable for manufacturing the 3D glass cover.

Specifically, the microcrystalline glass in this embodiment of this application undergoes high-temperature heat bending at 670°C~780°C. Before and after heat bending, a change of the average crystalline phase particle size of the microcrystalline glass is less than or equal to 5%, and a change in a mass fraction of crystallinity is less than or equal to 5%. After heat bending, a value of a chromaticity coordinate |b| of the microcrystalline glass is less than or equal to 0.6, and haze thereof is less than or equal to 0.2%. A heat bending process has a small impact on a crystalline phase in the microcrystalline glass, a crystalline phase size is stable and controllable, and optical performance is stable and controllable, so that there is no need to perform additional compensation processing due to an excessively large change of the crystalline phase size and/or an excessively large change of the optical performance.

Further, the foregoing microcrystalline glass further has good acid-alkali resistance performance. Specifically, a weight loss resulting after the microcrystalline glass is held in an HCl solution with a mass fraction of 5% at 95°C for 24h is not greater than 0.2 mg/cm². A weight loss resulting after the microcrystalline glass is held in a NaOH solution with a mass fraction of 5% at 95°C for 6h is not greater than 0.2 mg/cm².

With good acid-alkali resistance performance, the microcrystalline glass meets a cleaning requirement in a 3D manufacturing process: The microcrystalline glass is cleaned for less than or equal to 2h in an ultrasonic cleaner or a flat cleaner by using a cleaning solvent with PH of 12-14; before and after cleaning, a change of the value of the chromaticity coordinate |b| of the microcrystalline glass is less than or equal to 0.2; and after cleaning, an anti-fingerprint coating is directly deposited or sprayed on a surface of the microcrystalline glass. An abrasion resistance capability of the fingerprint layer meets the following: a water contact angle is greater than 100° after 2500 times of rubbing by using a rubber. In this way, compared with a process of manufacturing the 3D glass cover by using secondary-toughened glass, in this embodiment of this application, the 3D glass cover is manufactured by using the foregoing microcrystalline glass, without adding a new process, so that a manufacturing method is simple, to help reduce manufacturing costs.

In some embodiments, a manufacturing process of manufacturing the 3D glass cover by using the microcrystalline glass is the same as a manufacturing process of manufacturing the 3D glass cover by using the secondary-toughened glass. Specifically, the manufacturing process of manufacturing the 3D glass cover by using the microcrystalline glass is as follows: CNC → cleaning → 3D heat bending → polishing → cleaning → chemical toughening → cleaning → ink printing → cleaning → anti-fingerprint layer deposition or spraying.

To form the microcrystalline glass that has the foregoing type of the primary crystalline phase and the foregoing purity of the primary crystalline phase, chemical composition of a glass matrix used to form the microcrystalline glass includes SiO₂, Al₂O₃, Li₂O, Na₂O, K₂O, P2O5, and ZrO₂. A sum of a mass fraction of SiO₂ and a mass fraction of Al₂O₃ is greater than or equal to 65% and less than or equal to 80%, a mass fraction of Li₂O is greater than or equal to 8% and less than or equal to 15%, a sum of a mass fraction of Na₂O and a mass fraction of K₂O is greater than 0 and less than or equal to 10%, and a sum of a mass fraction of P₂O₅ and a mass fraction of ZrO₂ is greater than or equal to 5% and less than or equal to 15%. A formula for calculating the mass fraction of each component in the glass matrix is dividing a mass of each component by a total mass of the glass matrix.

For example, in some embodiments, the sum of the mass fraction of SiO₂ and the mass fraction of Al₂O₃ is 65%, 68%, 70%, 72%, 75%, 78%, or 80%. The mass fraction of Li₂O is 8%, 9%, 10%, 11%, 12%, 12%, 14% or 15%. The sum of the mass fraction of Na₂O and the mass fraction of K₂O is 0.5%, 1%, 2%, 3%, 4%, 5%, 6%, 7%, 8%, 9%, or 10%. The sum of the mass fraction of P₂O₅ and the mass fraction of ZrO₂ is 5%, 6%, 7%, 8%, 9%, 10%, 11%, 12%, 13%, 14%, or 15%.

SiO₂ is a component constituting a glass skeleton. As a main body of a glass network structure, SiO₂ provides good chemical stability, mechanical performance, and molding performance for the base glass and the microcrystalline glass. In a glass microcrystallization process, a source of SiO₂ is provided for forming a crystalline phase.

Al₂O₃ can also stabilize the glass network structure, and also provides improved mechanical performance and chemical durability. A volume of Al₂O₃ is greater than a volume of a silicon oxygen tetrahedron. Therefore, Al₂O₃ is added, so that a larger gap can be generated in the glass structure, to facilitate ion exchange. In this way, a chemical toughening effect is better, and mechanical performance of the glass is improved.

Li₂O is a network modifier oxide, to help reduce viscosity of the glass, and facilitate melting and clarification of the glass, so as to help form a lithium disilicate crystalline phase in a crystallization process. In addition to being used to form lithium silicate-type crystal to improve intrinsic strength of the glass, Li₂O can further exchange with Na in a chemical toughening process to form a deep compressive stress layer, to help introduce a Na/Li exchange layer to form compressive stress, so as to help improve resistance strength of the glass to piercing by a hard object.

Na₂O and K₂O can significantly reduce viscosity of the base glass, facilitate melting and clarification of the base glass, and reduce a crystallization temperature of the glass, so that the crystallized glass can be strengthened with K ions in potassium nitrate molten salt. This helps enhance chemical toughening capabilities of the base glass and the microcrystalline glass.

P₂O₅ and ZrO₂ are nucleating agents. P₂O₅ may facilitate crystal formation, improve crystallinity of the microcrystalline glass, and increase hardness and strength of the microcrystalline glass. ZrO₂ may increase the glass network structure, facilitate chemical toughening of the microcrystalline glass, increase a depth of an ion exchange layer of a microcrystalline glass product, and improve a drop ball test height of the microcrystalline glass product. Cooperation between ZrO₂ and P₂O₅ can refine a grain, and reduce haze of the microcrystalline glass and the microcrystalline glass product.

Specifically, the glass matrix may be produced by using a melt casting method. After heat processing is performed on the glass matrix, the microcrystalline glass may be obtained. In some embodiments, the following two steps of heat processing are performed on the glass matrix to obtain the microcrystalline glass that has the foregoing type of the primary crystalline phase and the foregoing purity of the primary crystalline phase:

A temperature of the first step of heat processing is 500°C~550°C, and processing time thereof is 1h~8h. In some embodiments, the temperature of the first step of heat processing is 500°C, 510°C, 520°C, 530°C, 540°C, 540°C, or the like, and the processing time thereof is 1h, 2h, 3h, 4h, 5h, 6h, 7h, 8h, or the like.

A temperature of the second step of heat processing is 600°C~900°C, and processing time thereof is 1h~8h. In some embodiments, the temperature of the second step of heat processing is 600°C, 640°C, 650°C, 700°C, 750°C, 800°C, 850°C, 900°C, or the like, and the processing time thereof is 1h, 2h, 3h, 4h, 5h, 6h, 7h, 8h, or the like.

Based on the foregoing formulation and heat processing process, microcrystalline glass that has the foregoing type of the primary crystalline phase, the foregoing purity of the primary crystalline phase, and the average crystalline phase particle size may be produced, so that the microcrystalline glass has excellent mechanical performance and optical performance. Therefore, when the chemically-toughened microcrystalline glass that meets a requirement of the foregoing stress curve is obtained, manufacturing difficulty and manufacturing costs of the chemically-toughened microcrystalline glass can be reduced.

With reference to specific embodiments, the following describes in detail a production method for a 3D glass cover that includes the foregoing chemically-toughened microcrystalline glass.

### Embodiment 1

The production method for a 3D glass cover includes the following:
(1) Produce a glass matrix by using a melt casting method, where composition of the glass matrix includes: a sum of a mass fraction of SiO₂ and a mass fraction of Al₂O₃ is 65%, a mass fraction of Li₂O is 1%, a sum of a mass fraction of Na₂O and a mass fraction of K₂O is 10%, and a sum of a mass fraction of P₂O₅ and a mass fraction of ZrO₂ is 10%.
(2) Perform two steps of heat processing on the produced glass matrix to obtain microcrystalline glass, where a temperature of the first step of heat processing is 540°C, processing time thereof is 2h, a temperature of the second step of heat processing is 750°C~900°C, and processing time is 5h. It is measured that a primary crystalline phase of the microcrystalline glass is lithium disilicate, a ratio of a mass fraction of the primary crystalline phase to a mass fraction of a secondary crystalline phase is 15, and an average crystalline phase particle size is 35 nm.
(3) Cut/grind/polish the produced microcrystalline glass into a raw glass sheet, and then perform heat bending on the raw glass sheet by using a 3D graphite mold, to obtain a 3D shape, where a maximum heat bending temperature is 650°C, heat bending compressive stress is 0.9 MPa, and time of single-station heat bending is 30s. Before and after heat bending, an increase of a mass fraction of crystallinity of the microcrystalline glass is not greater than 5%.
(4) Polish, by using a 3D polishing brush, an uneven surface of the 3D microcrystalline glass obtained through heat bending.
(5) Perform chemical toughening processing on the 3D microcrystalline glass obtained after polishing processing, to obtain chemically-toughened microcrystalline glass, where molten salt used for chemical toughening processing includes NaNO₃, KNO₃, and LiNO₃, a mass fraction of NaNO₃ is 30%, a mass fraction of KNO₃ is 67%, a mass fraction of LiNO₃ is 3%, a toughening temperature is 380°C, and toughening time is 10h.
(6) Sequentially perform processing such as cleaning, ink printing, cleaning, and anti-fingerprint coating deposition on the chemically-toughened microcrystalline glass, to obtain a 3D glass cover.

Before and after cleaning, a change of a value of a color difference |b| of the chemically-toughened microcrystalline glass is 0.12. After 2500 times of rubbing is performed on a finished product by using a rubber, a water contact angle is 108°. This meets an application requirement. Other performance of the 3D glass cover is shown in Table 1.

### Embodiment 2

The production method for a 3D glass cover includes the following:
(1) Produce a glass matrix by using a melt casting method, where composition of the glass matrix includes: a sum of a mass fraction of SiO₂ and a mass fraction of Al₂O₃ is 80%, a mass fraction of Li₂O is 14%, a sum of a mass fraction of Na₂O and a mass fraction of K₂O is 1%, and a sum of a mass fraction of P₂O₅ and a mass fraction of ZrO₂ is 5%.
(2) Perform two steps of heat processing on the produced glass matrix to obtain microcrystalline glass, where a temperature of the first step of heat processing is 500°C, processing time thereof is 4h, a temperature of the second step of heat processing is 640°C, and processing time is 5h. It is measured that a primary crystalline phase of the microcrystalline glass is lithium disilicate, a ratio of a mass fraction of the primary crystalline phase to a mass fraction of a secondary crystalline phase is 12, and an average crystalline phase particle size is 53 nm.
(3) Cut/grind/polish the produced microcrystalline glass into a raw glass sheet, and then perform heat bending on the raw glass sheet by using a 3D graphite mold, to obtain a 3D shape, where a maximum heat bending temperature is 720°C, heat bending compressive stress is 0.5 MPa, and time of single-station heat bending is 90s. Before and after heat bending, an increase of a mass fraction of crystallinity of the microcrystalline glass is not greater than 3%.
(4) Polish, by using a 3D polishing brush, an uneven surface of the 3D microcrystalline glass obtained through heat bending.
(5) Perform the first chemical toughening processing on the 3D microcrystalline glass obtained after polishing processing, where molten salt used for the first chemical toughening processing is pure NaNO₃, that is, a mass fraction of NaNO₃ is 100%, a toughening temperature is 450°C, and toughening time is 0.5h.
(6) Perform the second chemical toughening processing on the 3D microcrystalline glass obtained after the first chemical toughening processing, to obtain chemically-toughened microcrystalline glass, where molten salt used for the second chemical toughening processing includes KNO₃, NaNO₃, and LiNO₃, a mass fraction of KNO₃ is 80%, a mass fraction of NaNO₃ is 19.5%, a mass fraction of LiNO₃ is 0.5%, a toughening temperature is 380°C, and toughening time is 6h.
(7) Sequentially perform processing such as cleaning, ink printing, cleaning, and anti-fingerprint coating deposition on the produced chemically-toughened microcrystalline glass, to obtain a 3D glass cover.

Before and after cleaning, a change of a value of a color difference |b||b| of the chemically-toughened microcrystalline glass is 0.12. After 2500 times of rubbing is performed on a finished product by using a rubber, a water contact angle is 118°. This meets an application requirement. Other performance of the 3D glass cover is shown in Table 1.

### Embodiment 3

The production method for a 3D glass cover includes the following:
(1) Produce a glass matrix by using a melt casting method, where composition of the glass matrix includes: a sum of a mass fraction of SiO₂ and a mass fraction of Al₂O₃ is 75%, a mass fraction of Li₂O is 8%, a sum of a mass fraction of Na₂O and a mass fraction of K₂O is 1%, and a sum of a mass fraction of P₂O₅ and a mass fraction of ZrO₂ is 10%.
(2) Perform two steps of heat processing on the produced glass matrix to obtain microcrystalline glass, where a temperature of the first step of heat processing is 520°C, processing time thereof is 6h, a temperature of the second step of heat processing is 760°C, and processing time is 2h. It is measured that a primary crystalline phase of the microcrystalline glass is lithium disilicate, a ratio of a mass fraction of the primary crystalline phase to a mass fraction of a secondary crystalline phase is 5, and an average crystalline phase particle size is 80 nm.
(3) Cut/grind/polish the produced microcrystalline glass into a raw glass sheet, and then perform heat bending on the raw glass sheet by using a 3D graphite mold, to obtain a 3D shape, where a maximum heat bending temperature is 750°C, heat bending compressive stress is 0.1 MPa, and time of single-station heat bending is 120s. Before and after heat bending, an increase of a mass fraction of crystallinity of the microcrystalline glass is not greater than 3%.
(4) Polish, by using a 3D polishing brush, an uneven surface of the 3D microcrystalline glass obtained through heat bending.
(5) Perform the first chemical toughening processing on the 3D microcrystalline glass obtained after polishing processing, where molten salt used for the first chemical toughening processing includes NaNO₃ and KNO₃, a mass fraction of NaNO₃ is 80%, a toughening temperature is 430°C, and toughening time is 2h.
(6) Perform the second chemical toughening processing on the 3D microcrystalline glass obtained after the first chemical toughening processing, to obtain chemically-toughened microcrystalline glass, where molten salt used for the second chemical toughening processing includes KNO₃ and NaNO₃, a mass fraction of KNO₃ is 95%, a mass fraction of NaNO₃ is 5%, a toughening temperature is 450°C, and toughening time is 0.2h.
(7) Sequentially perform processing such as cleaning, ink printing, cleaning, and anti-fingerprint coating deposition on the produced chemically-toughened microcrystalline glass, to obtain a 3D glass cover.

Before and after cleaning, a change of a value of |b| of the chemically-toughened microcrystalline glass is 0.07. After 2500 times of rubbing is performed on a finished product by using a rubber, a water contact angle is 106°. This meets an application requirement. Other performance of the 3D glass cover is shown in Table 1.

### Comparative Example 1

The production method for a 3D glass cover includes the following:
(1) Produce a glass matrix by using a melt casting method, where composition of the glass matrix includes: a sum of a mass fraction of SiO₂ and a mass fraction of Al₂O₃ is 75%, a mass fraction of Li₂O is 8%, a sum of a mass fraction of Na₂O and a mass fraction of K₂O is 1%, and a sum of a mass fraction of P₂O₅ and a mass fraction of ZrO₂ is 10%.
(2) Perform two steps of heat processing on the produced glass matrix to obtain microcrystalline glass, where a temperature of the first step of heat processing is 540°C, processing time thereof is 2h, a temperature of the second step of heat processing is 750°C~900°C, and processing time is 5h. It is measured that a primary crystalline phase of the microcrystalline glass is lithium disilicate, a ratio of a mass fraction of the primary crystalline phase to a mass fraction of a secondary crystalline phase is 15, and an average crystalline phase particle size is 35 nm.
(3) Cut/grind/polish the produced microcrystalline glass into a raw glass sheet, and then perform heat bending on the raw glass sheet by using a 3D graphite mold, to obtain a 3D shape, where a maximum heat bending temperature is 650°C, heat bending compressive stress is 0.9 MPa, and time of single-station heat bending is 30s. Before and after heat bending, an increase of a mass fraction of crystallinity of the microcrystalline glass is not greater than 5%.
(4) Polish, by using a 3D polishing brush, an uneven surface of the 3D microcrystalline glass obtained through heat bending.
(5) Perform chemical toughening processing on the 3D microcrystalline glass obtained after polishing processing, to obtain chemically-toughened microcrystalline glass, where molten salt used for chemical processing includes NaNO₃, KNO₃, and LiNO₃, a mass fraction of NaNO₃ is 30%, a mass fraction of KNO₃ is 67%, a mass fraction of LiNO₃ is 3%, a toughening temperature is 370°C, and toughening time is 5h.
(6) Sequentially perform processing such as cleaning, ink printing, cleaning, and anti-fingerprint coating deposition on the chemically-toughened microcrystalline glass, to obtain a 3D glass cover.

Before and after cleaning, a change of a value of a color difference |b| of the chemically-toughened microcrystalline glass is 0.12. After 2500 times of rubbing is performed on a finished product by using a rubber, a water contact angle is 109°. This meets an application requirement. Other performance of the 3D glass cover is shown in Table 1.

### Comparative Example 2

The production method for a 3D glass cover includes the following:
(1) Produce a glass matrix by using a melt casting method, where composition of the glass matrix includes: a sum of a mass fraction of SiO₂ and a mass fraction of Al₂O₃ is 49%, a mass fraction of Li₂O is 17%, a sum of a mass fraction of Na₂O and a mass fraction of K₂O is 4%, and a sum of a mass fraction of P₂O₅ and a mass fraction of ZrO₂ is 10%.
(2) Perform two steps of heat processing on the produced glass matrix to obtain microcrystalline glass, where a temperature of the first step of heat processing is 490°C, processing time thereof is 4h, a temperature of the second step of heat processing is 640°C, and processing time is 4h. It is measured that a primary crystalline phase of the microcrystalline glass is lithium disilicate, a ratio of a mass fraction of the primary crystalline phase to a mass fraction of a secondary crystalline phase is 2, and an average crystalline phase particle size is 32 nm.
(3) Cut/grind/polish the produced microcrystalline glass into a raw glass sheet, and then perform heat bending on the raw glass sheet by using a 3D graphite mold, to obtain a 3D shape, where a maximum heat bending temperature is 690°C, heat bending compressive stress is 0.4 MPa, and time of single-station heat bending is 30s.
(4) Polish, by using a 3D polishing brush, an uneven surface of the 3D microcrystalline glass obtained through heat bending.
(5) Perform chemical toughening processing on the 3D microcrystalline glass obtained after polishing processing, to obtain chemically-toughened microcrystalline glass, where molten salt used for chemical processing includes NaNO₃, KNO₃, and LiNO₃, a mass fraction of NaNO₃ is 30%, a mass fraction of KNO₃ is 67%, a mass fraction of LiNO₃ is 3%, a toughening temperature is 380°C, and toughening time is 10h.
(6) Sequentially perform processing such as cleaning, ink printing, cleaning, and anti-fingerprint coating deposition on the chemically-toughened microcrystalline glass, to obtain a 3D glass cover.

Before and after cleaning, a change of a color difference |b| of the chemically-toughened microcrystalline glass is 0.3. After 2500 times of rubbing is performed on a finished product by using a rubber, a water contact angle is 68°. This does not meet an application requirement. Other performance of the 3D glass cover is shown in Table 1.

**Table 1 Performance table of 3D glass covers in Embodiments 1-3 and Comparative Examples 1-2**

| Test items | | Embodiment 1 | Embodiment 2 | Embodiment 3 | Comparative Example 1 | Comparative Example 2 |
|---|---|---|---|---|---|---|
| Physical property | Primary crystalline phase | Lithium disilicate | Lithium disilicate | Lithium disilicate | Lithium disilicate | Lithium disilicate |
| | Ratio of a mass fraction | 15 | 12 | 5 | 15 | 2 |
| | of a primary crystalline phase to a mass fraction of a secondary crystalline phase | | | | | |
| | Young's modulus E (GPa) | 106 | 95 | 115 | 106 | 95 |
| | Thickness (mm) | 0.4 | 0.62 | 0.65 | 0.4 | 0.4 |
| | Average grain size (nm) | 35 | 53 | 80 | 35 | 75 |
| Stress curve | Integral area of compressive stress (MPa* µm) | 270 | 11004 | 6350 | 35 | 32 |
| | Depth of a compressive stress layer DOC (µm) | 100 | 141 | 102 | 75 | 68 |
| | Center tensile stress (MPa) | 125 | 115 | 70 | 65 | 62 |
| Optical performance | Transmittance (550 nm) | 91.5% | 91.3% | 90.0% | 91.5% | 89.8% |
| | Color | 0.4 | 0.3 | 0.6 | 0.4 | 0.97 |
| | difference \|b\| | | | | | |
| | Haze (%) | 0.08 | 0.1 | 0.12 | 0.08 | 0.25 |
| Drop test | Average drop height on 180# SiC sandpaper surface (m) | 1.9 | 2.5 | 2.1 | 1.4 | 1.5 |
| | Average drop height on 80# SiC sandpaper surface (m) | 1.5 | 2.2 | 1.8 | 0.9 | 1 |
| Extrusion test | Average size of longest edges of fragments (mm) | 9 | 5 | 11 | 13 | 8 |

It may be learned from Table 1 that, in Embodiment 1, the thickness of the glass cover is 0.4 mm, the depth of the compressive stress layer DOC is 100 µm, the integral area S of the stress curve L in an interval of x∈[50 µm, DOC] is 270 MPa*µm, and 36000t²-21600t+3150=270 MPa*µm. Therefore, S being greater than or equal to 36000t² -21600t+3150 is met, that is, S≥36000t²-21600t+3150 is met.

In this embodiment, the glass cover exhibits excellent drop resistance performance in a drop test. Specifically, the average drop height on the 180# SiC sandpaper surface is 1.9 m, and the average drop height on the 80 # SiC sandpaper surface is 1.5 m. In this application, a drop test method for the glass cover is as follows: attaching the glass cover to an electronic device sample such as a mobile phone to enable the glass cover to freely fall from a high position, and recording a height at which the glass cover is broken. This height value may reflect strength of the glass cover.

The glass cover further has excellent optical performance. Specifically, the transmittance at 550 nm is 91.5%, a value of the color difference |b| is 0.4, and the haze is 0.08%.

The glass cover has excellent mechanical performance. Specifically, the Young's modulus is 106 GPa, the depth of the compressive layer DOC is 100 µm, the center tensile stress CT is 125 MPa, and the average size of the longest edges of the fragments obtained after the chemically-toughened microcrystalline glass is broken under extrusion of a circular-head metal pressure rod with a diameter of 10 mm is 9 mm.

In Embodiment 2, the thickness of the glass cover is 0.62 mm, the depth of the compressive stress layer DOC is 141 µm, the integral area S of the stress curve L in an interval of x∈[50 µm, DOC] is 11004 MPa*µm, and 36000t²-21600t+3150=3596.4 MPa*µm. Therefore, S being greater than or equal to 36000t²-21600t+3150 is met, that is, S≥36000t²-21600t+3150 is met.

In this embodiment, the glass cover exhibits excellent drop resistance performance in a drop test. Specifically, the average drop height on the 180# SiC sandpaper surface is 2.5 m, and the average drop height on the 80 # SiC sandpaper surface is 2.2 m.

The glass cover further has excellent optical performance. Specifically, the transmittance at 550 nm is 91.3%, a value of the color difference |b| is 0.3, and the haze is 0.1%.

The glass cover has excellent mechanical performance. Specifically, the Young's modulus is 95 GPa, the depth of the compressive layer DOC is 141 µm, the center tensile stress CT is 115 MPa, and the average size of the longest edges of the fragments obtained after the chemically-toughened microcrystalline glass is broken under extrusion of a circular-head metal pressure rod with a diameter of 10 mm is 5 mm.

In Embodiment 3, the thickness of the glass cover is 0.65 mm, the depth of the compressive stress layer DOC is 102 µm, the integral area S of the stress curve L in an interval of x∈[50 µm, DOC] is 6350 MPa*µm, and 36000t²-21600t+3150=4320 MPa*µm. Therefore, S being greater than or equal to 36000t²-21600t+3150 is met, that is, S≥36000t²-21600t+3150 is met.

In this embodiment, the glass cover exhibits excellent drop resistance performance in a drop test. Specifically, the average drop height on the 180# SiC sandpaper surface is 2.1 m, and the average drop height on the 80 # SiC sandpaper surface is 1.8 m.

The glass cover further has excellent optical performance. Specifically, the transmittance at 550 nm is 90%, a value of the color difference |b| is 0.6, and the haze is 0.12%.

The glass cover has excellent mechanical performance. Specifically, the Young's modulus is 115 GPa, the depth of the compressive layer DOC is 102 µm, the center tensile stress CT is 70 MPa, and the average size of the longest edges of the fragments obtained after the chemically-toughened microcrystalline glass is broken under extrusion of a circular-head metal pressure rod with a diameter of 10 mm is 11 mm.

In Comparative Example 1, the thickness of the glass cover is 0.4 mm, the depth of the compressive stress layer DOC is 75 µm, the integral area S of the stress curve L in an interval of x∈[50 µm, DOC] is 35 MPa*µm, and 36000t²-21600t+3150=270 MPa*µm. Therefore, S being greater than or equal to 36000t²-21600t+3150 is not met, that is, S≥36000t²-21600t+3150 is not met.

In this embodiment, drop resistance performance of the glass cover in a drop test is not ideal. Specifically, the average drop height on the 180# SiC sandpaper surface is only 1.4 m, and the average drop height on the 80 # SiC sandpaper surface is only 1 m.

In Comparative Example 2, the thickness of the glass cover is 0.4 mm, the depth of the compressive stress layer DOC is 68 µm, the integral area S of the stress curve L in an interval of x∈[50 µm, DOC] is 32 MPa*µm, and 36000t²-21600t+3150=270 MPa*µm. Therefore, S being greater than or equal to 36000t²-21600t+3150 is not met, that is, S≥36000t²-21600t+3150 is not met.

In this embodiment, neither of drop resistance performance and optical performance of the glass cover in a drop test is ideal. Specifically, the average drop height on the 180# SiC sandpaper surface is only 1.5 m, the average drop height on the 80 # SiC sandpaper surface is only 1 m, the transmittance at 550 nm light is 89.8%, the value of |b| is 0.97, and the haze is 0.25%.

In conclusion, it may be learned that the area S enclosed by the stress curve L of the chemically-toughened microcrystalline glass, the straight line y=0, and the straight line x=50 µm is greater than or equal to 36000t²-21600t+3150 MPa*µm, that is, the integral area S of the stress curve L of the chemically-toughened microcrystalline glass in the interval of x∈[50 µm, DOC] is greater than or equal to 36000t²-21600t+3150 MPa*µm. In this way, rough-ground drop resistance performance of the chemically-toughened microcrystalline glass can be improved, so that drop resistance performance of the glass cover and the electronic device including the glass cover can be improved.

Referring to Table 2, Table 2 is a result of comparison between cleaning resistance capabilities of the microcrystalline glass produced in Embodiment 1 and Comparative Example 2 before heat bending.

**Table 2**

| Change of a value of \|b\| (relative to an original sample before cleaning) | | | | | |
|---|---|---|---|---|---|
| Material | Cleaning condition | First change of a value of [b] | Second change of a value of \|b\| | Third change of a value of \|b\| | Fourth change of a value of \|b\| |
| Comparative Example 2 | PH of a cleaning solvent is 12-14, each round lasts 30 min, and ultrasonic cleaning is performed | 0.18 | 0.32 | 0.45 | 0.61 |
| Embodiment 1 | PH of a cleaning solvent is 12-14, each round lasts 30 min, and ultrasonic cleaning is performed | 0.02 | 0.05 | 0.12 | 0.2 |

For a sample with a small change of the value of |b| before and after cleaning, it indicates that cleaning has a small impact on a mass of a surface, and the glass is more resistant to cleaning.

It may be learned from Table 2 that, in Comparative Example 2, for the microcrystalline glass produced based on composition of the glass matrix thereof and the heat processing process, after the first cleaning, the change of the value of |b| is 0.18; after the second cleaning, the change of the value of |b| is 0.32; after the third cleaning, the change of the value of |b| is 0.45; and after the fourth cleaning, the change of the value of |b| is 0.61. Before and after the second cleaning, before and after the third cleaning, and before and after the fourth cleaning, the change of the value of |b| of the microcrystalline glass is large. Therefore, it may be learned that the cleaning resistance capability of the microcrystalline glass in Comparative Example 2 is poor.

In Embodiment 1, for the microcrystalline glass produced based on composition of the glass matrix thereof and the heat processing process, after the first cleaning, the change of the value of |b| is 0.02; after the second cleaning, the change of the value of |b| is 0.05; after the third cleaning, the change of the value of |b| is 0.12; and after the fourth cleaning, the change of the value of |b| is 0.2. Before and after the first cleaning, before and after the second cleaning, before and after the third cleaning, and before and after the fourth cleaning, the change of the value of |b| of the microcrystalline glass is small. Therefore, it may be learned that the cleaning resistance capability of the microcrystalline glass in Embodiment 1 is good.

In this embodiment of this application, the glass cover (for example, the transparent cover and the back cover) of the electronic device is set to the foregoing chemically-toughened microcrystalline glass, so that a compressive stress-bearing capacity of the glass cover can be improved, and a rough-ground drop resistance capability of the electronic device can be significantly improved.

Specifically, when the chemically-toughened microcrystalline glass is used as the transparent cover or the back cover of the electronic device, the electronic device exhibits excellent drop resistance performance in a drop test. It is measured that, the average drop height of the electronic device on the 80 # SiC sandpaper surface is not less than 1.5 m, and the average drop height of the electronic device on the 180 # SiC sandpaper surface is not less than 1.9 m. A drop test method for the electronic device is as follows: enabling the electronic device to freely fall from a high position, recording a drop height at which the glass cover is broken, and calculating the average drop height of the electronic device through a plurality of drop tests.

In this way, when the electronic device is dropped to rough ground, the glass cover of the electronic device is not easily damaged, so that a service life of the electronic device can be effectively improved, and maintenance costs can be reduced.

In the description of this specification, specific features, structures, materials, or characteristics may be properly combined in any one or more embodiments or examples.

## Claims

1. An electronic device, comprising a glass cover, wherein the glass cover comprises chemically-toughened microcrystalline glass, the chemically-toughened microcrystalline glass comprises a first surface and a second surface that are opposite to each other, wherein each of the first and second surfaces have been chemically toughened, the chemically-toughened microcrystalline glass has a stress curve, the stress curve is a curve drawn by using a distance between any point inside the chemically-toughened microcrystalline glass and the first surface or the second surface as a horizontal coordinate and a stress intensity at the point as a vertical coordinate, an area enclosed by straight lines x=50 µm and y=0 and the stress curve is greater than or equal to 36000t²-21600t+3150 MPa*µm, and t is a thickness of the chemically-toughened microcrystalline glass, and is in a unit of mm;
wherein microcrystalline glass used to form the chemically-toughened microcrystalline glass comprises a primary crystalline phase and a secondary crystalline phase, and a ratio of a mass fraction of the primary crystalline phase to a mass fraction of the secondary crystalline phase is greater than or equal to 5; and
wherein the primary crystalline phase consists of lithium disilicate.

2. The electronic device according to claim 1, wherein a depth of a compressive stress layer of the chemically-toughened microcrystalline glass is greater than or equal to 0.18t and less than or equal to 0.25t.

3. The electronic device according to claim 1 or 2, wherein center tensile stress of the chemically-toughened microcrystalline glass is greater than or equal to 70 MPa, and an average size of longest edges of fragments obtained after the chemically-toughened microcrystalline glass is broken under extrusion of a circular-head metal pressure rod with a diameter of 10 mm is greater than or equal to 5 mm.

4. The electronic device according to claim 1-3, wherein the mass fraction of the secondary crystalline phase is less than or equal to 10%.

5. The electronic device according to claim 1-4, wherein the secondary crystalline phase comprises at least one of lithium feldspar, lithium metasilicate, zirconium salt, and phosphate crystal.

6. The electronic device according to any one of claims 1-5, wherein an average crystalline phase particle size of the microcrystalline glass is less than or equal to 80 nm.

7. The electronic device according to claim 6, wherein the average crystalline phase particle size of the microcrystalline glass is greater than or equal to 10 nm.

8. The electronic device according to any one of claims 1-7, wherein the microcrystalline glass is manufactured from a glass matrix, chemical composition of the glass matrix comprises SiO₂, Al₂O₃, Li₂O, Na₂O, K₂O, P₂O₅, and ZrO₂, a sum of a mass fraction of SiO₂ and a mass fraction of Al₂O₃ is greater than or equal to 65% and less than or equal to 80%, a mass fraction of Li₂O is greater than or equal to 8% and less than or equal to 15%, a sum of a mass fraction of Na₂O and a mass fraction of K₂O is greater than 0 and less than or equal to 10%, and a sum of a mass fraction of P₂O₅ and a mass fraction of ZrO₂ is greater than or equal to 5% and less than or equal to 15%.

9. A glass cover, comprising chemically-toughened microcrystalline glass, wherein the chemically-toughened microcrystalline glass comprises a first surface and a second surface that are opposite to each other, wherein each of the first and second surfaces have been chemically toughened, the chemically-toughened microcrystalline glass has a stress curve, the stress curve is a curve drawn by using a distance between any point inside the chemically-toughened microcrystalline glass and the first surface or the second surface as a horizontal coordinate and a stress intensity at the point as a vertical coordinate, an area enclosed by straight lines x=50 µm and y=0 and the stress curve is greater than or equal to 36000t²-21600t+3150 MPa*µm, and t is a thickness of the chemically-toughened microcrystalline glass, and is in a unit of mm;
wherein microcrystalline glass used to form the chemically-toughened microcrystalline glass comprises a primary crystalline phase and a secondary crystalline phase, and a ratio of a mass fraction of the primary crystalline phase to a mass fraction of the secondary crystalline phase is greater than or equal to 5; and
wherein the primary crystalline phase consists of lithium disilicate.

10. The glass cover according to claim 9, wherein center tensile stress of the chemically-toughened microcrystalline glass is greater than or equal to 70 megapascals, and an average size of longest edges of fragments obtained after the chemically-toughened microcrystalline glass is broken under extrusion of a circular-head metal pressure rod with a diameter of 10 mm is greater than or equal to 5 mm.

11. The glass cover according to claim 9 or 10, wherein the mass fraction of the secondary crystalline phase is less than or equal to 10%.

12. The glass cover according to claim 11, wherein the secondary crystalline phase comprises at least one of lithium feldspar, lithium metasilicate, zirconium salt, and phosphate crystal.

13. Chemically-toughened microcrystalline glass, wherein the chemically-toughened microcrystalline glass comprises a first surface and a second surface that are opposite to each other, wherein each of the first and second surfaces have been chemically toughened, the chemically-toughened microcrystalline glass has a stress curve, the stress curve is a curve drawn by using a distance between any point inside the chemically-toughened microcrystalline glass and the first surface or the second surface as a horizontal coordinate and a stress intensity at the point as a vertical coordinate, an area enclosed by straight lines x=50 µm and y=0 and the stress curve is greater than or equal to 36000t²-21600t+3150 MPa*µm, and t is a thickness of the chemically-toughened microcrystalline glass, and is in a unit of mm;
wherein microcrystalline glass used to form the chemically-toughened microcrystalline glass comprises a primary crystalline phase and a secondary crystalline phase, and a ratio of a mass fraction of the primary crystalline phase to a mass fraction of the secondary crystalline phase is greater than or equal to 5; and
wherein the primary crystalline phase consists of lithium disilicate.

## Patentansprüche

1. Elektronische Vorrichtung, umfassend eine Glasabdeckung, wobei die Glasabdeckung chemisch gehärtetes Glaskeramikmaterial umfasst, wobei das chemisch gehärtete Glaskeramikmaterial eine erste Oberfläche und eine zweite Oberfläche aufweist, die einander gegenüberliegen, wobei sowohl die erste als auch die zweite Oberfläche chemisch gehärtet wurden, wobei das chemisch gehärtete Glaskeramikmaterial eine Spannungskurve aufweist, wobei die Spannungskurve eine Kurve ist, die unter Verwendung eines Abstands zwischen einem beliebigen Punkt innerhalb des chemisch gehärteten Glaskeramikmaterials und der ersten Oberfläche oder der zweiten Oberfläche als horizontale Koordinate und einer Spannungsintensität an dem Punkt als vertikale Koordinate gezeichnet wird, wobei eine Fläche, die von den Geraden x=50 µm und y=0 und der Spannungskurve eingeschlossen wird, größer oder gleich 36000t²-21600t+3150 MPa*µm ist, und t eine Dicke des chemisch gehärteten Glaskeramikmaterials ist und in der Einheit mm angegeben wird;
wobei das zur Bildung des chemisch gehärteten Glaskeramikmaterials verwendete Glaskeramikmaterial eine primäre kristalline Phase und eine sekundäre kristalline Phase umfasst und ein Verhältnis eines Massenanteils der primären kristallinen Phase zu einem Massenanteil der sekundären kristallinen Phase größer oder gleich 5 ist; und
wobei die primäre kristalline Phase aus Lithiumdisilikat besteht.

2. Elektronische Vorrichtung nach Anspruch 1, wobei eine Tiefe einer Druckspannungsschicht des chemisch gehärteten Glaskeramikmaterials größer oder gleich 0,18t und kleiner oder gleich 0,25t ist.

3. Elektronische Vorrichtung nach Anspruch 1 oder 2, wobei die mittlere Zugspannung des chemisch gehärteten Glaskeramikmaterials größer oder gleich 70 MPa ist und eine durchschnittliche Größe der längsten Kanten von Fragmenten, die erhalten werden, nachdem das chemisch gehärtete Glaskeramikmaterial unter dem Druck eines Metallstabes mit rundem Kopf und einem Durchmesser von 10 mm zerbrochen ist, größer oder gleich 5 mm ist.

4. Elektronische Vorrichtung nach Anspruch 1-3, wobei der Massenanteil der sekundären kristallinen Phase kleiner oder gleich 10 % ist.

5. Elektronische Vorrichtung nach Anspruch 1-4, wobei die sekundäre kristalline Phase mindestens eines von Lithiumfeldspat, Lithiummetasilikat, Zirkoniumsalz und Phosphatkristall umfasst.

6. Elektronische Vorrichtung nach einem der Ansprüche 1-5, wobei eine durchschnittliche Teilchengröße der kristallinen Phase des Glaskeramikmaterials kleiner oder gleich 80 nm ist.

7. Elektronische Vorrichtung nach Anspruch 6, wobei die durchschnittliche Teilchengröße der kristallinen Phase des Glaskeramikmaterials größer oder gleich 10 nm ist.

8. Elektronische Vorrichtung nach einem der Ansprüche 1-7, wobei das Glaskeramikmaterial aus einer Glasmatrix hergestellt ist, wobei die chemische Zusammensetzung der Glasmatrix SiO₂, Al₂O₃, Li₂O, Na₂O, K₂O, P₂O₅ und ZrO₂ umfasst, wobei eine Summe eines Massenanteils von SiO₂ und eines Massenanteils von Al₂O₃ größer oder gleich 65 % und kleiner oder gleich 80 % ist, ein Massenanteil von Li₂O größer oder gleich 8 % und kleiner oder gleich 15 % ist, eine Summe eines Massenanteils von Na₂O und eines Massenanteils von K₂O größer als 0 und kleiner oder gleich 10 % ist, und eine Summe eines Massenanteils von P₂O₅ und eines Massenanteils von ZrO₂ größer oder gleich 5 % und kleiner oder gleich 15 % ist.

9. Glasabdeckung, umfassend chemisch gehärtetes Glaskeramikmaterial, wobei das chemisch gehärtete Glaskeramikmaterial eine erste Oberfläche und eine zweite Oberfläche umfasst, die einander gegenüberliegen, wobei sowohl die erste als auch die zweite Oberfläche chemisch gehärtet wurden, wobei das chemisch gehärtete Glaskeramikmaterial eine Spannungskurve aufweist, wobei die Spannungskurve eine Kurve ist, die unter Verwendung eines Abstands zwischen einem beliebigen Punkt innerhalb des chemisch gehärteten Glaskeramikmaterials und der ersten Oberfläche oder der zweiten Oberfläche als horizontale Koordinate und einer Spannungsintensität an dem Punkt als vertikale Koordinate gezeichnet ist, wobei eine von den Geraden x=50 µm und y=0 und der Spannungskurve umschlossene Fläche größer oder gleich 36000t²-21600t+3150 MPa*µm ist, und t eine Dicke des chemisch gehärteten Glaskeramikmaterials ist und in der Einheit mm angegeben wird;
wobei das zur Bildung des chemisch gehärteten Glaskeramikmaterials verwendete Glaskeramikmaterial eine primäre Kristallphase und eine sekundäre Kristallphase umfasst, und wobei ein Verhältnis eines Massenanteils der primären Kristallphase zu einem Massenanteil der sekundären Kristallphase größer oder gleich 5 ist; und
wobei die primäre Kristallphase aus Lithiumdisilikat besteht.

10. Glasabdeckung nach Anspruch 9, wobei die zentrale Zugspannung des chemisch gehärteten Glaskeramikmaterials größer oder gleich 70 Megapascal ist und eine durchschnittliche Größe der längsten Kanten von Fragmenten, die erhalten werden, nachdem das chemisch gehärtete Glaskeramikmaterial unter Extrusion durch einen Metalldruckstab mit Rundkopf und einem Durchmesser von 10 mm zerbrochen wurde, größer oder gleich 5 mm ist.

11. Glasabdeckung nach Anspruch 9 oder 10, wobei der Massenanteil der sekundären Kristallphase kleiner oder gleich 10 % ist.

12. Glasabdeckung nach Anspruch 11, wobei die sekundäre Kristallphase mindestens eines der folgenden Materialien umfasst: Lithiumfeldspat, Lithiummetasilikat, Zirkoniumsalz und Phosphatkristall.

13. Chemisch gehärtetes mikrokristallines Glas, wobei das chemisch gehärtete mikrokristalline Glas eine erste Oberfläche und eine zweite Oberfläche umfasst, die einander gegenüberliegen, wobei sowohl die erste als auch die zweite Oberfläche chemisch gehärtet wurden, das chemisch gehärtete mikrokristalline Glas eine Spannungskurve aufweist, die Spannungskurve eine Kurve ist, die unter Verwendung eines Abstands zwischen einem beliebigen Punkt innerhalb des chemisch gehärteten mikrokristallinen Glases und der ersten Oberfläche oder der zweiten Oberfläche als Abszisse und einer Spannungsintensität an dem Punkt als Ordinate aufgetragen wird, eine von den Geraden x=50 µm und y=0 und der Spannungskurve eingeschlossene Fläche größer oder gleich 36000t²-21600t+3150 MPa*µm ist, und t eine Dicke des chemisch gehärteten mikrokristallinen Glases ist und in der Einheit mm angegeben wird;
wobei das zur Bildung des chemisch gehärteten mikrokristallinen Glases verwendete mikrokristalline Glas eine primäre Kristallphase und eine sekundäre Kristallphase umfasst und ein Verhältnis eines Massenanteils der primären Kristallphase zu einem Massenanteil der sekundären Kristallphase größer oder gleich 5 ist; und
wobei die primäre Kristallphase aus Lithiumdisilicat besteht.

## Revendications

1. Dispositif électronique, comprenant un couvercle en verre, dans lequel le couvercle en verre comprend du verre microcristallin chimiquement trempé, le verre microcristallin chimiquement trempé comprend une première surface et une seconde surface qui sont opposées l'une à l'autre, dans lequel chacune des première et seconde surfaces a été chimiquement trempée, le verre microcristallin chimiquement trempé présente une courbe de contrainte, la courbe de contrainte est une courbe tracée en utilisant une distance entre un point quelconque à l'intérieur du verre microcristallin chimiquement trempé et la première surface ou la seconde surface comme coordonnée horizontale et une intensité de contrainte au point comme coordonnée verticale, une zone délimitée par les lignes droites x=50 µm et y=0 et la courbe de contrainte est supérieure ou égale à 36000t²-21600t+3150 MPa*µm, et t est une épaisseur du verre microcristallin chimiquement trempé, et est exprimée en mm ;
dans lequel le verre microcristallin utilisé pour former le verre microcristallin chimiquement trempé comprend une phase cristalline primaire et une phase cristalline secondaire, et un rapport d'une fraction massique de la phase cristalline primaire sur une fraction massique de la phase cristalline secondaire est supérieur ou égal à 5 ; et
dans lequel la phase cristalline primaire est constituée de disilicate de lithium.

2. Dispositif électronique selon la revendication 1, dans lequel une profondeur d'une couche de contrainte de compression du verre microcristallin chimiquement trempé est supérieure ou égale à 0,18t et inférieure ou égale à 0,25t.

3. Dispositif électronique selon la revendication 1 ou 2, dans lequel une contrainte de traction centrale du verre microcristallin chimiquement trempé est supérieure ou égale à 70 MPa, et une taille moyenne des bords les plus longs des fragments obtenus après que le verre microcristallin chimiquement trempé est brisé sous l'extrusion d'une tige de pression métallique à tête circulaire d'un diamètre de 10 mm est supérieure ou égale à 5 mm.

4. Dispositif électronique selon les revendications 1 à 3, dans lequel la fraction massique de la phase cristalline secondaire est inférieure ou égale à 10 %.

5. Dispositif électronique selon les revendications 1 à 4, dans lequel la phase cristalline secondaire comprend au moins l'un parmi le feldspath de lithium, le métasilicate de lithium, un sel de zirconium et un cristal de phosphate.

6. Dispositif électronique selon l'une quelconque des revendications 1 à 5, dans lequel une taille moyenne de particule de phase cristalline du verre microcristallin est inférieure ou égale à 80 nm.

7. Dispositif électronique selon la revendication 6, dans lequel la taille moyenne de particule de phase cristalline du verre microcristallin est supérieure ou égale à 10 nm.

8. Dispositif électronique selon l'une quelconque des revendications 1 à 7, dans lequel le vitrocéramique est fabriqué à partir d'une matrice de verre, la composition chimique de la matrice de verre comprenant SiO₂, Al₂O₃, Li₂O, Na₂O, K₂O, P₂O₅ et ZrO₂, la somme de la fraction massique de SiO₂ et de la fraction massique de Al₂O₃ étant supérieure ou égale à 65 % et inférieure ou égale à 80 %, la fraction massique de Li₂O étant supérieure ou égale à 8 % et inférieure ou égale à 15 %, la somme de la fraction massique de Na₂O et de la fraction massique de K₂O étant supérieure à 0 et inférieure ou égale à 10 %, et la somme de la fraction massique de P₂O₅ et de la fraction massique de ZrO₂ étant supérieure ou égale à 5 % et inférieure ou égale à 15 %.

9. Couvercle en verre, comprenant un vitrocéramique chimiquement trempé, dans lequel le vitrocéramique chimiquement trempé comprend une première surface et une seconde surface qui sont opposées l'une à l'autre, dans lequel chacune des première et seconde surfaces a été chimiquement trempée, le vitrocéramique chimiquement trempé présente une courbe de contrainte, la courbe de contrainte étant une courbe tracée en utilisant comme coordonnée horizontale une distance entre un point quelconque à l'intérieur du vitrocéramique chimiquement trempé et la première ou la seconde surface, et comme coordonnée verticale une intensité de contrainte au niveau de ce point, une aire délimitée par les lignes droites x=50 µm et y=0 et la courbe de contrainte étant supérieure ou égale à 36000t²-21600t+3150 MPa*µm, où t est une épaisseur du vitrocéramique chimiquement trempé, exprimée en mm ;
dans lequel le vitrocéramique utilisé pour former le vitrocéramique chimiquement trempé comprend une phase cristalline primaire et une phase cristalline secondaire, et le rapport de la fraction massique de la phase cristalline primaire à la fraction massique de la phase cristalline secondaire est supérieur ou égal à 5 ; et
dans lequel la phase cristalline primaire est constituée de disilicate de lithium.

10. Couvercle en verre selon la revendication 9, dans lequel la contrainte de traction centrale du vitrocéramique chimiquement trempé est supérieure ou égale à 70 mégapascals, et la taille moyenne des bords les plus longs des fragments obtenus après la rupture du vitrocéramique chimiquement trempé sous l'extrusion d'une tige de pression métallique à tête circulaire d'un diamètre de 10 mm est supérieure ou égale à 5 mm.

11. Couvercle en verre selon la revendication 9 ou 10, dans lequel la fraction massique de la phase cristalline secondaire est inférieure ou égale à 10 %.

12. Couvercle en verre selon la revendication 11, dans lequel la phase cristalline secondaire comprend au moins l'un parmi le feldspath de lithium, le métasilicate de lithium, un sel de zirconium et un cristal de phosphate.

13. Verre microcristallin chimiquement trempé, dans lequel le verre microcristallin chimiquement trempé comprend une première surface et une seconde surface qui sont opposées l'une à l'autre, dans lequel chacune des première et seconde surfaces a été chimiquement trempée, le verre microcristallin chimiquement trempé présente une courbe de contrainte, la courbe de contrainte est une courbe tracée en utilisant une distance entre tout point à l'intérieur du verre microcristallin chimiquement trempé et la première surface ou la seconde surface comme coordonnée horizontale et une intensité de contrainte au niveau du point comme coordonnée verticale, une aire délimitée par les lignes droites x=50 µm et y=0 et la courbe de contrainte est supérieure ou égale à 36000t²-21600t+3150 MPa*µm, et t est une épaisseur du verre microcristallin chimiquement trempé, et est exprimée en mm ;
dans lequel le verre microcristallin utilisé pour former le verre microcristallin chimiquement trempé comprend une phase cristalline primaire et une phase cristalline secondaire, et un rapport d'une fraction massique de la phase cristalline primaire sur une fraction massique de la phase cristalline secondaire est supérieur ou égal à 5 ; et
dans lequel la phase cristalline primaire est constituée de disilicate de lithium.
